# EUROPEAN PATENT APPLICATION

(11) **EP 4 671 938 A1**
(43) Date of publication of application: **31.12.2025**
(21) Application number: 25154090.2
(22) Date of filing: 27.01.2025
(51) Int. Cl.: G06F 3/0481

(54) **INTERFACE PROCESSING METHOD, ELECTRONIC DEVICE, STORAGE MEDIUM, AND COMPUTER PROGRAM PRODUCT**

(30) Priority: 24.06.2024 CN 202410822922
(71) Applicant: Beijing Xiaomi Mobile Software Co., Ltd., Beijing 100085 (CN)
(72) Inventor: SHAN, Zhiliang, Beijing (CN)
(74) Representative: Dehns Germany Partnerschaft mbB

(57) **Abstract**

An interface processing method includes displaying, in a floating manner, a second interface on a first interface, where the second interface has a smaller size than the first interface; determining a target region in the first interface not covered by the second interface; and adjusting, based on a pixel value of a pixel in the target region, a display position of the second interface on the first interface.

## Description

### TECHNICAL FIELD

The present invention relates to the field of computer communications and, in particular, to an interface processing method, an electronic device, a storage medium, and a computer program product.

### BACKGROUND

Currently, when a plurality of interfaces are displayed in an electronic device, part of the interfaces may be displayed in a floating manner in an upper layer of another interface, and the underlayer interface may be used as a background of the upper layer interface. For example, application controls and the like may be displayed in a floating manner in the upper layer of an application interface.

### SUMMARY

In order to overcome the problems in the related art, the present invention provides an interface processing method, an electronic device, a storage medium, and a computer program product, which can make, on the basis of realizing flexible adjustment of the display position of the second interface, the display effect of the second interface match the visual effect of the user.

According to a first aspect of the present invention, an interface processing method is provided, including: displaying, in a floating manner, a second interface on a first interface, where the second interface has a smaller size than the first interface; determining a target region in the first interface not covered by the second interface; and adjusting, based on a pixel value of a pixel in the target region, a display position of the second interface on the first interface.

In some embodiments, the target region includes a first sub-region and a second sub-region located at two opposite sides of the second interface; and the adjusting the display position of the second interface on the first interface includes: in response to the first sub-region having a same width as the second sub-region, determining, based on pixel values of pixels in the first sub-region, a first brightness value corresponding to the first sub-region, and determining, based on pixel values of pixels in the second sub-region, a second brightness value corresponding to the second sub-region; and adjusting, based on the first brightness value and the second brightness value, the display position of the second interface on the first interface; where a width of a sub-region is a vertical distance between a side edge of the first interface and a side edge of the second interface.

In some embodiments, the adjusting, based on the first brightness value and the second brightness value, the display position of the second interface on the first interface includes: determining, in response to the first brightness value and the second brightness value being different, a difference value between the first brightness value and the second brightness value; and adjusting, in response to the difference value being greater than a preset deviation threshold, the display position of the second interface on the first interface.

In some embodiments, the adjusting, in response to the difference value being greater than the preset deviation threshold, the display position of the second interface on the first interface includes: obtaining, in response to the difference value being greater than the preset deviation threshold, a comparison result by comparing the first brightness value and the second brightness value; and moving the second interface in accordance with a moving direction corresponding to the comparison result; where a moving distance of the second interface is positively correlated with the difference value.

In some embodiments, the moving the second interface in accordance with the moving direction corresponding to the comparison result includes: moving, in response to the comparison result indicating that the first brightness value is less than the second brightness value, the second interface in a direction towards the second sub-region until the difference value is less than or equal to the preset deviation threshold; and moving, in response to the comparison result indicating that the first brightness value is greater than the second brightness value, the second interface in a direction towards the first sub-region until the difference value is less than or equal to the preset deviation threshold.

In some embodiments, the method further includes: maintaining, in response to the difference value being less than or equal to the preset deviation threshold, the display position of the second interface on the first interface.

According to a second aspect of the embodiments of the present invention, there is provided an interface processing apparatus, including: a first display module, configured to display, in a floating manner, a second interface on a first interface, where the second interface has a smaller size than the first interface; a determination module, configured to determine a target region in the first interface not covered by the second interface; and an adjustment module, configured to adjust, based on a pixel value of a pixel in the target region, a display position of the second interface on the first interface.

In some embodiments, the target region includes a first sub-region and a second sub-region located at two opposite sides of the second interface; and the adjustment module is configured to: in response to the first sub-region having a same width as the second sub-region, determine, based on pixel values of pixels in the first sub-region, a first brightness value corresponding to the first sub-region, and determine, based on pixel values of pixels in the second sub-region, a second brightness value corresponding to the second sub-region; and adjust, based on the first brightness value and the second brightness value, the display position of the second interface on the first interface; where a width of a sub-region is a vertical distance between a side edge of the first interface and a side edge of the second interface.

In some embodiments, the adjustment module is configured to: determine, in response to the first brightness value and the second brightness value being different, a difference value between the first brightness value and the second brightness value; and adjust, in response to the difference value being greater than a preset deviation threshold, the display position of the second interface on the first interface.

In some embodiments, the adjustment module is configured to: obtain, in response to the difference value being greater than the preset deviation threshold, a comparison result by comparing the first brightness value and the second brightness value; and move the second interface in accordance with a moving direction corresponding to the comparison result; where a moving distance of the second interface is positively correlated with the difference value.

In some embodiments, the adjustment module is configured to: move, in response to the comparison result indicating that the first brightness value is less than the second brightness value, the second interface in a direction towards the second sub-region until the difference value is less than or equal to the preset deviation threshold; and move, in response to the comparison result indicating that the first brightness value is greater than the second brightness value, the second interface in a direction towards the first sub-region until the difference value is less than or equal to the preset deviation threshold.

In some embodiments, the apparatus further includes: a second display module, configured to maintain, in response to the difference value being less than or equal to the preset deviation threshold, the display position of the second interface on the first interface.

According to a third aspect of the present invention, there is provided an electronic device, including: a processor; and a memory storing a computer program or an instruction; where the processor is configured to perform any method in the first aspect.

According to a fourth aspect of the present invention, there is provided a non-transitory computer-readable storage medium storing an instruction that, when executed by a processor of an electronic device, causes the electronic device to perform any method in the first aspect.

According to a fifth aspect of the present invention, there is provided a computer program product including a computer program or an instruction, where the computer program or the instruction, when executed by a processor, implements steps of any method in the first aspect.

The technical solutions provided in the embodiments of the present invention may include the following beneficial effects.

In the embodiments of the present invention, the pixel value of the pixel in the target region can be determined, and based on the pixel value of the pixel in the target region, the display position of the second interface on the first interface can be adjusted, which enables the display position of the second interface on the first interface to correspond to the pixel value of the pixel in the target region.

Compared to the related art in which fixed display parameters are set to display the second interface at a target position on the first interface, the present invention adjusts the display position of the second interface on the first interface to correspond to the pixel value of the pixel in the target region. Since the pixel value of the pixel in the target region can affect the visual effect of the user, the display effect of the second interface can be enabled to match the visual effect of the user on the basis of the realizing of the flexible adjustment of the display position of the second interface.

It should be understood that the above general description and the subsequent detailed description are merely exemplary and explanatory, and do not limit the present invention.

### BRIEF DESCRIPTION OF THE DRAWINGS

The accompanying drawings herein, which are incorporated into and form a part of the specification, illustrate the embodiments in accordance with the present invention and are used together with the specification to explain the principles of the present invention.
FIG. 1 is a flowchart of an interface processing method according to an exemplary embodiment.
FIG. 2 is a schematic diagram of an interface according to an exemplary embodiment.
FIG. 3 is a schematic diagram of an interface according to an exemplary embodiment.
FIG. 4 is a flowchart of an interface processing method according to an exemplary embodiment.
FIG. 5 is a block diagram of an interface processing apparatus according to an exemplary embodiment.
FIG. 6 is a block diagram of an electronic device according to an exemplary embodiment.

### DETAILED DESCRIPTION

Exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the present invention. On the contrary, they are only examples of devices and methods consistent with some aspects of the present invention as detailed in the appended claims.

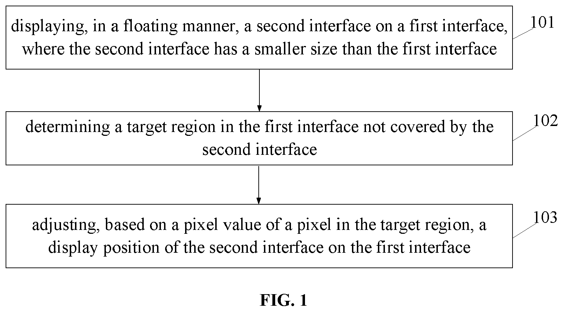

FIG. 1 is a flowchart of an interface processing method according to an exemplary embodiment. As shown in FIG. 1, the method may include the following steps 101 to 103.

At step 101, a second interface is displayed, in a floating manner, on a first interface, where the second interface has a smaller size than the first interface.

At step 102, a target region in the first interface not covered by the second interface is determined.

At step 103, a display position of the second interface on the first interface is adjusted based on a pixel value of a pixel in the target region.

The interface processing method in the present invention may be applied to an electronic device. The electronic device may include a terminal device, for example, a mobile terminal or a fixed terminal. In some embodiments, the mobile terminal may include a mobile phone, a tablet computer, a laptop computer, a wearable electronic device, and other devices. The fixed terminal may include a desktop computer, a smart TV, a vehicle-mounted device, and the like. In the related art, fixed display parameters are set to display the upper layer interface at a target position of the underlayer interface, but this may result in a mismatch between the display effect and the visual effect of the user.

In some embodiments, the first interface may be displayed through a display screen of the electronic device, and the second interface may be displayed on the first interface in a floating manner. Here, the first interface may be an application interface of an application program run on the electronic device. The second interface may be an interface displayed in an upper layer of the application interface in a floating manner, and may include, for example, an application control, a message pop-up window, a prompt box, and the like. In other embodiments, the first interface may also be a home screen interface of the electronic device, and the second interface may be an interface displayed in the upper layer of the home screen interface in a floating manner, for example, the second interface may include a message sending interface, an application icon, and the like, as long as the second interface is displayed on the first interface in a floating manner, and the size of the second interface is smaller than the size of the first interface. The type of the first interface and the type of the second interface are not listed herein. In other embodiments, the second interface may also be at least two, as long as the first interface is not completely covered by the second interface.

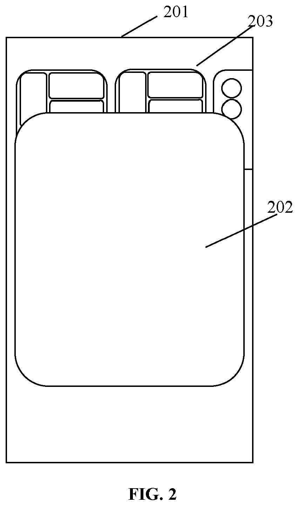

FIG. 2 is a schematic diagram of an interface according to an exemplary embodiment. As shown in FIG. 2, the second interface 202 may be displayed on the first interface 201 in a floating manner. When the second interface 202 is displayed on the first interface 201 in a floating manner, since the size of the second interface 202 is smaller than the size of the first interface 201, there will be a region in the first interface 201 that is not covered by the second interface 202, i.e., the target region 203.

In the embodiments of the present invention, the pixel value of the pixel in the target region may be determined, and based on the pixel value of the pixel in the target region, the display position of the second interface on the first interface may be adjusted. In some embodiments, after the pixel value of the pixel in the target region is determined, a grey scale value (greyscale value) of the pixel in the target region may be obtained based on the pixel value of the pixel in the target region, and the display position of the second interface on the first interface may be adjusted based on the grey scale value of the pixel in the target region. In some embodiments, the pixel value of the pixel in the target region may characterize the light-dark levels of respective parts of the target region.

Since the corresponding light-dark level is different when the pixel value of the pixel is different, in order to present different visual effects, the display position of the second interface on the first interface may be adjusted based on the pixel value of the pixel to satisfy the desired visual effects in different usage scenarios. In some embodiments, taking the first interface being an application interface of an application program as an example, the current usage scenario may be determined based on the application type of the application program, and then the display position of the second interface on the first interface may be adjusted based on the current usage scenario and the pixel value of the pixel in the target region.

For example, if the current usage scenario requires presenting the second interface at a left side of the first interface, the display position of the second interface on the first interface may be adjusted based on the pixel value of the pixel in the target region, enabling the second interface to appear at the left side of the first interface in terms of visual effect. For another example, if the current usage scenario requires presenting the second interface at a middle position on the first interface, the display position of the second interface on the first interface may be adjusted based on the pixel value of the pixel in the target region, enabling the second interface to be located at the middle of the first interface in terms of visual effect.

For example, the target region may be divided into at least two sub-regions based on the positions of the parts in the target region, and then the display position of the second interface on the first interface is adjusted based on pixel values of pixels in the sub-regions. For example, when it is determined that a first average value of pixel values of pixels in the first sub-region of the target region located at a first side (top side) of the second interface is smaller than a second average value of pixel values of pixels in the second sub-region of the target region located at a second side (bottom side) of the second interface, it is indicated that the brightness of the first sub-region is lower than the brightness of the second sub-region. In this case, the second interface may be moved in a direction towards the second sub-region in order to enable the second interface to be located visually at the top-bottom middle of the first interface .

In the embodiments of the present invention, the pixel value of the pixel in the target region may be determined, and based on the pixel value of the pixel in the target region, the display position of the second interface on the first interface may be adjusted, which enables the display position of the second interface on the first interface to correspond to the pixel value of the pixel in the target region.

Compared to the related art in which fixed display parameters are set to display the second interface at a target position on the first interface, the present invention adjusts the display position of the second interface on the first interface to correspond to the pixel value of the pixel in the target region. Since the pixel value of the pixel in the target region can affect the visual effect of the user, the display effect of the second interface can be enabled to match the visual effect of the user on the basis of the realizing of the flexible adjustment of the display position of the second interface.

In some embodiments, the target region includes a first sub-region and a second sub-region located at two opposite sides of the second interface; and adjusting, based on the pixel value of the pixel in the target region, the display position of the second interface on the first interface includes: when the first sub-region has a same width as the second sub-region, determining, based on pixel values of pixels in the first sub-region, a first brightness value corresponding to the first sub-region, and determining, based on pixel values of pixels in the second sub-region, a second brightness value corresponding to the second sub-region; and adjusting, based on the first brightness value and the second brightness value, the display position of the second interface on the first interface; where a width of a sub-region is a vertical distance between a side edge of the first interface and a side edge of the second interface.

In some embodiments, after the pixel values of the pixels in the first sub-region are obtained, grey scale values of the pixels may be obtained based on the pixel values of the pixels. After the grey scale values of the pixels are obtained, the first brightness value corresponding to the first sub-region may be determined based on the grey scale values of the pixels in the first sub-region. For example, the first brightness value is determined based on an average value of the grey scale values of the pixels in the first sub-region. For example, the average value of the grey scale values of the pixels in the first sub-region is determined as the first brightness value of the first sub-region.

After the pixel values of the pixels in the second sub-region are obtained, grey scale values of the pixels may be obtained based on the pixel values of the pixels. After the grey scale values of the pixels are obtained, the second brightness value corresponding to the second sub-region may be determined based on the grey scale values of the pixels in the second sub-region. For example, the second brightness value is determined based on an average value of the grey scale values of the pixels in the second sub-region. For example, the average value of the grey scale values of the pixels in the second sub-region is determined as the second brightness value of the second sub-region.

For example, the first sub-region may be a region, in the first interface, located at the left side of the second interface, and the second sub-region may be a region, in the first interface, located at the right side of the second interface. In order to enable the left-right middle display of the second interface on the first interface, the width of the first sub-region and the width of the second sub-region may be set to be the same, but in the case where the content in the first sub-region and the content in the second sub-region are different, the brightness level of the first sub-region and the brightness level of the second sub-region may be different. In this case, even though the width of the first sub-region and the width of the second sub-region are set to be the same, the width of the first sub-region and the width of the second sub-region are visually different.

In some embodiments, the first sub-region may also be a region, in the first interface, located at a top side of the second interface, and the second sub-region may be a region, in the first interface, located at a bottom side of the second interface.

In some embodiments, the height of the first sub-region and the height of the second sub-region are the same. By setting the height of the first sub-region and the height of the second sub-region to be the same, and making the width of the first sub-region and the width of the second sub-region to be the same, the final visual effect can be made to be more objective and realistic when the display position of the second interface is adjusted.

In an embodiment of the present invention, when the width of the first sub-region and the width of the second sub-region are set to be the same, the pixel values of the pixels in the first sub-region and the pixel values of the pixels in the second sub-region are then determined, the first brightness value corresponding to the first sub-region is determined based on the pixel values of the pixels in the first sub-region, and the second brightness value corresponding to the second sub-region is determined based on the pixel values of the pixels in the second sub-region. The display position of the second interface on the first interface is then adjusted based on the first brightness value and the second brightness value, and since the width of the sub-region is the vertical distance between the side edge of the first interface and the side edge of the second interface, the visual effect of widths of gaps at the left and right sides may be adjusted by adjusting the display position of the second interface, enabling the display position of the second interface on the first interface to be more compatible with the visual effect of the user.

By first setting the width of the first sub-region and the width of the second sub-region to be the same, then determining the first brightness value and the second brightness value, the display position of the second interface on the first interface is adjusted based on the first brightness value and the second brightness value. That is, it has been determined that the first sub-region and second sub-region are essentially symmetrical but the visual effect is asymmetrical before the adjustment of the display position of the second interface. Compared to the direct adjustment of the display position of the second interface on the first interface based on the first brightness value and the second brightness value, ineffective adjustment can be reduced.

In some embodiments, adjusting, based on the first brightness value and the second brightness value, the display position of the second interface on the first interface includes: determining, when the first brightness value and the second brightness value are different, a difference value between the first brightness value and the second brightness value; and adjusting, when the difference value is greater than a preset deviation threshold, the display position of the second interface on the first interface.

For example, when the first brightness value and the second brightness value are different, it is indicated that the light-dark level of the first sub-region and the light-dark level of the second sub-region are different. In this case, the display position of the second interface on the first interface may be directly adjusted to make the display effect of the second interface on the first interface meet the user requirement. For example, when the first brightness value is smaller than the second brightness value, in order to enable the middle display of the second interface on the first interface, the second interface may be moved in a direction towards the second sub-region, etc.

In an embodiment of the present invention, when the first brightness value and the second brightness value are different, the difference value between the first brightness value and the second brightness value may also be determined, and in the case where the difference value is greater than the preset deviation threshold, the display position of the second interface on the first interface may be adjusted. It is to be understood that when the first brightness value and the second brightness value are different, it is indicated that the light-dark level of the first sub-region and the light-dark level of the second sub-region are different, and in this case, the difference value between the first brightness value and the second brightness value may be determined, and thus a deviation value between the light-dark level of the first sub-region and the light-dark level of the second sub-region may be determined. By comparing the difference value between the first lightness value and the second lightness value with the preset deviation threshold, in the case where the difference value is greater than the preset deviation threshold, it is indicated that the deviation value between the light-dark level of the first sub-region and the light-dark level of the second sub-region is relatively large, and has already caused an impact on the visual effect of the second interface. At this time, adjusting the display position of the second interface on the first interface can improve the accuracy of the adjustment of the display position of the second interface.

In some embodiments, the preset deviation threshold may be a preset critical value. When the critical value is reached, it is indicated that the light-dark level has an impact on the visual effect. The critical value may be a value customized by the user based on his or her own needs. The critical value may also be obtained by way of experimentation.

In some embodiments, the method further includes: maintaining, when the difference value is less than or equal to the preset deviation threshold, a current display position of the second interface on the first interface.

In some embodiments, when the difference value between the first brightness value and the second brightness value is less than or equal to the preset deviation threshold, it is indicated that the deviation value between the light-dark level of the first sub-region and the light-dark level of the second sub-region is relatively small, and does not have too much impact on the visual effect of the second interface. At this time, the display position of the second interface on the first interface may be maintained, reducing ineffective adjustment.

In some embodiments, adjusting, when the difference value is greater than the preset deviation threshold, the display position of the second interface on the first interface includes: obtaining, when the difference value is greater than the preset deviation threshold, a comparison result by comparing the first brightness value and the second brightness value; and moving the second interface in accordance with a moving direction corresponding to the comparison result; where a moving distance of the second interface is positively correlated with the difference value.

It should be noted that when the difference value between the first brightness value and the second brightness value is greater than the preset deviation threshold, the comparison result may be obtained by comparing the first brightness value and the second brightness value, and the second interface is moved in accordance with the moving direction corresponding to the comparison result. In some embodiments, the comparison result is used for determining the moving direction of the second interface.

In some embodiments, the moving distance of the second interface may be set to be positively correlated with the difference value between the first brightness value and the second brightness value. That is, the greater the difference value between the first brightness value and the second brightness value, the greater the moving distance of the second interface; and the smaller the difference value between the first brightness value and the second brightness value, the smaller the moving distance of the second interface. By correlating the difference value between the first brightness value and the second brightness value with the moving distance of the second interface, the moving distance of the second interface can be determined in a more refined manner, and compared to moving the second interface based on an empirical value, the final visual effect presented can be made to be more in line with the user requirement.

In some embodiments, a mapping relationship between the difference value and the moving distance may be preset. In a scenario in which the second interface needs to be moved, if the difference value between the first brightness value and the second brightness value is determined, the corresponding moving distance may be determined based on the difference value and the preset mapping relationship, and then the display position of the second interface on the first interface may be moved based on the moving distance.

In some embodiments, moving the second interface in accordance with the moving direction corresponding to the comparison result includes: moving, when the comparison result indicates that the first brightness value is less than the second brightness value, the second interface in a direction towards the second sub-region until the difference value is less than or equal to the preset deviation threshold; and moving, when the comparison result indicates that the first brightness value is greater than the second brightness value, the second interface in a direction towards the first sub-region until the difference value is less than or equal to the preset deviation threshold.

When the first brightness value is less than the second brightness value, it is indicated that the first sub-region is darker than the second sub-region, and the first sub-region is visually narrower than the second sub-region. In this case, the second interface is moved in the direction towards the second sub-region until the difference value between the first brightness value and the second brightness value is less than or equal to the preset deviation threshold, thereby realizing that the second interface is visually located at the middle of the first interface.

When the first brightness value is greater than the second brightness value, it is indicated that the second sub-region is darker than the first sub-region, and the second sub-region is visually narrower than the first sub-region. In this case, the second interface is moved in the direction towards the first sub-region until the difference value between the first brightness value and the second brightness value is less than or equal to the preset deviation threshold, thereby realizing that the second interface is visually located at the middle of the first interface.

In an embodiment of the present invention, in the process of moving the second interface, the first brightness value of the first sub-region and the second brightness value of the second sub-region may be obtained in real time, and the second interface may be adjusted based on the newly obtained first brightness value and second brightness value until the difference value between the first brightness value and the second brightness value is made less than or equal to the preset deviation threshold, which can realize the dynamic adjustment of the second interface, and thus realizing the middle display of the second interface in terms of visual effect.

In some embodiments, taking the requirement of the middle display of the application control in a mobile terminal as an example, this may be achieved directly by setting the same gap at the left and right sides of the application control, without considering whether the background contents of the gaps are the same. In some embodiments, the gap may be understood as the part of the interface where the application control is located that is not covered by the application control. For example, for two vertical rectangles of the same height and width, when the background colors are different and the light-dark difference is relatively large, because of the visual illusion, the user may be made to feel that the vertical bar with the dark background is slightly narrower, and the vertical bar with the bright background is slightly wider, which makes the user feel that the application control is not displayed at the middle, and seriously affects the user experience.

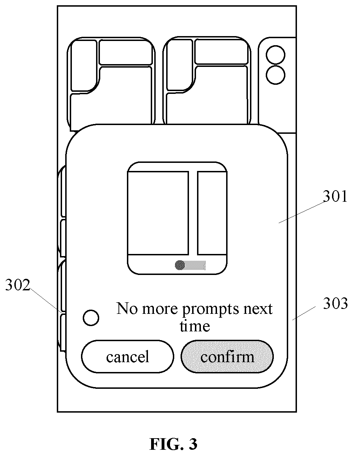

FIG. 3 is a schematic diagram of an interface according to an exemplary embodiment. As shown in FIG. 3, in the electronic device, the second interface 301 (application control) needs to be displayed at the middle, and the width of the first sub-region 302 and the width of the second sub-region 303 (the gaps at the left and right sides of the application control) are the same, but the content of the background image in the first sub-region 302 and the content of the background image in the second sub-region 303 are not quite the same, the difference between the pixel values ( image grey scales) is relatively large, and the light-dark difference between the images is relatively large, because of the visual illusion, the user is made to feel that the width of the first sub-region 302 and the width of the second sub-region 303 are not the same, and that the second interface 301 is not at the middle.

In an embodiment of the present invention, the width of the first sub-region and the width of the second sub-region may be dynamically adjusted by calculating the brightness values (grey scale values of the background images in the left and right gaps) of the first sub-region and the second sub-region, which enables the second interface to be displayed at the middle visually.

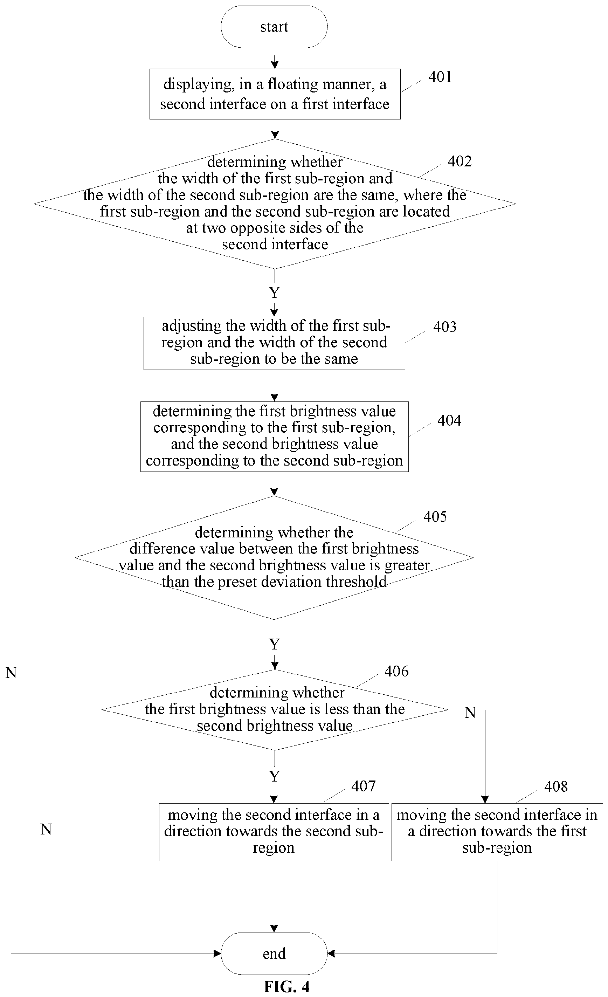

FIG. 4 a flowchart of an interface processing method according to an exemplary embodiment. As shown in FIG. 4, the method may include the following steps 401 to 408.

At step 401, the second interface is displayed on the first interface in a floating manner.

Here, taking the electronic device being a mobile terminal as an example, the first interface may be displayed through a display screen of the mobile terminal, and the second interface may be displayed on the first interface in a floating manner. For example, the first interface is an application interface of an application program, and one or more application controls may be displayed on the application interface.

At step 402, it is determined whether the width of the first sub-region and the width of the second sub-region are the same, where the first sub-region and the second sub-region are located at two opposite sides of the second interface, and if they are the same, step 403 is performed.

Here, whether the second interface is displayed at a middle position of the first interface may be determined. That is, it is determined whether the width of the first sub-region and the width of the second sub-region are the same, where the first sub-region and the second sub-region are located at two opposite sides of the second interface and are not covered by the second interface on the first interface.

At step 403, the width of the first sub-region and the width of the second sub-region are adjusted to be the same.

For example, the first sub-region may be a region, in the first interface, that is not covered by the second interface and is located at the top and bottom sides of the second interface (also referred to as the top and bottom gaps), or a region, in the first interface, that is not covered by the second interface and is located at the left and right sides of the second interface (also referred to as the left and right gaps). In some embodiments, the width of the first sub-region and the width of the second sub-region may be determined based on the number of pixels in the first sub-region and the number of pixels in the second sub-region.

Still using the example that the first interface is an application interface and the second interface is an application control, the first sub-region and the second sub-region may be regions of the application interface located at two opposite sides of the application control. Taking the number of the application control being one as an example, when the application control needs to be displayed at the middle of the application interface, the widths of the gaps at two sides of the application control may be set to be the same.

Taking the example that the first sub-region is a gap at the left side of the second interface and the second sub-region is a gap at the right side of the second interface, the width of the first sub-region may be calculated to be marginLeft, the width of the second sub-region may be calculated to be marginRight, and marginLeft=marginRight, i.e., the width of the first sub-region is the same as the width of the second sub-region.

At step 404, the first brightness value corresponding to the first sub-region is determined, and the second brightness value corresponding to the second sub-region is determined.

Here, the first brightness value corresponding to the first sub-region may be determined based on pixel values of pixels in the first sub-region, and the second brightness value corresponding to the second sub-region may be determined based on pixel values of pixels in the second sub-region.

Here, a grey scale value (first brightness value) corresponding to the first sub-region (first background image) may be determined based on the pixel values of the pixels in the first sub-region, which may be denoted as grayLeft; and a grey scale value (second brightness value) corresponding to the second sub-region (second background image) may be determined based on the pixel values of the pixels in the second sub-region, which may be denoted as grayRight.

At step 405, it is determined whether the difference value between the first brightness value and the second brightness value is greater than the preset deviation threshold, and if yes, step 406 is performed.

Here, when the first brightness value and the second brightness value are different, the difference value between the first brightness value and the second brightness value may be determined. After the difference value between the first brightness value and the second brightness value is obtained, an absolute value (|grayLeft-grayRight|) may be taken for the difference value, and the absolute value of the difference value may be compared with the preset deviation threshold (gray(0)) to determine whether the absolute value of the difference value is greater than the preset deviation threshold.

At step 406, when the difference value is greater than the preset deviation threshold, it is determined whether the first brightness value is less than the second brightness value, and if yes, step 407 is performed, otherwise step 408 is performed.

At step 407, when the first brightness value is less than the second brightness value, the second interface is moved in a direction towards the second sub-region.

Here, in the case where IgrayLeft-grayRightl > gray(0), and grayLeft < grayRight, it is indicated that the first sub-region is darker than the second sub-region, and the first sub-region is visually narrower than the second sub-region. In this case, the second interface is moved in the direction towards the second sub-region.

In some embodiments, the second interface may be moved x pixels in the direction towards the second sub-region, enabling that the width of the first sub-region is increased by x pixels while the width of the second sub-region is decreased by x pixels, that is, the width of the first sub-region is increased and the width of the second sub-region is decreased.

At step 408, when the first brightness value is greater than the second brightness value, the second interface is moved in a direction towards the first sub-region.

Here, in the case where |grayLeft-grayRight|>gray(0), and grayLeft>grayRight, it is indicated that the first sub-region is brighter than the second sub-region, and the first sub-region is visually wider than the second sub-region. In this case, the second interface is moved in the direction towards the first sub-region.

In some embodiments, the second interface may be moved x pixels in the direction towards the first sub-region, enabling that the width of the first sub-region is decreased by x pixels while the width of the second sub-region is increased by x pixels, that is, the width of the first sub-region is decreased and the width of the second sub-region is increased.

In some embodiments, the number x of pixels to be increased or decreased may be calculated according to the experimental data after looking up the table, or may be calculated according to a preset algorithm, as long as it is possible to make the two vertical bars, which are of the same height and have different grey scale values, to have the same width as seen by the human eye by setting the different widths, so as to achieve the effect that the application control is displayed at the middle of the application interface visually.

In other embodiments, when the difference value is less than or equal to the preset deviation threshold, the current display position of the second interface on the first interface is maintained.

Here, |grayLeft-grayRight|≤gray(0), i.e., when the difference value between the first brightness value and the second brightness value is less than or equal to the preset deviation threshold, it is indicated that the deviation value between the light-dark level of the first sub-region and the light-dark level of the second sub-region is relatively small, does not have too much impact on the visual effect of the second interface, and does not cause the user to visually feel that the gap at one side is narrow and the gap at the other side is wide.

In some embodiments, the grey scale value of the first sub-region and the grey scale value of the second sub-region may be obtained through the relevant interface integrated in the electronic device, and after the grey scale value is obtained, the adjustment of the display position of the second interface may be achieved through the code logic, which does not need to rely on additional hardware resources, resulting in low costs. Currently, when the application control is displayed at the middle, the left and right gaps are set to be of the same size, without considering the problem of different left and right widths caused by the visual illusion of the human eye due to the large difference in the gray scale (i.e., the light-dark difference is large) between the background images of the left and right gaps, which reduces the user experience. To solve the above problem, the present invention can set different gap widths according to different gray scale values, making the left and right gaps look the same to the user, thereby improving the user experience.

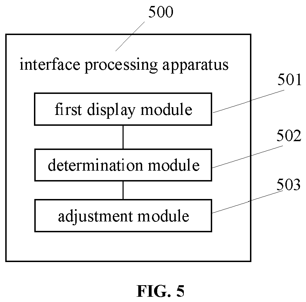

FIG. 5 is a block diagram of an interface processing apparatus 500 according to an exemplary embodiment. As shown in FIG. 5, the apparatus 500 mainly includes: a first display module 501, configured to display, in a floating manner, a second interface on a first interface, where the second interface has a smaller size than the first interface; a determination module 502, configured to determine a target region in the first interface not covered by the second interface; and an adjustment module 503, configured to adjust, based on a pixel value of a pixel in the target region, a display position of the second interface on the first interface.

In some embodiments, the target region includes a first sub-region and a second sub-region located at two opposite sides of the second interface; and the adjustment module 503 is configured to: when the first sub-region has a same width as the second sub-region, determine, based on pixel values of pixels in the first sub-region, a first brightness value corresponding to the first sub-region, and determine, based on pixel values of pixels in the second sub-region, a second brightness value corresponding to the second sub-region; and adjust, based on the first brightness value and the second brightness value, the display position of the second interface on the first interface; where a width of a sub-region is a vertical distance between a side edge of the first interface and a side edge of the second interface.

In some embodiments, the adjustment module 503 is configured to: determine, when the first brightness value and the second brightness value are different, a difference value between the first brightness value and the second brightness value; and adjust, when the difference value is greater than a preset deviation threshold, the display position of the second interface on the first interface.

In some embodiments, the adjustment module 503 is configured to: obtain, when the difference value is greater than the preset deviation threshold, a comparison result by comparing the first brightness value and the second brightness value; and move the second interface in accordance with a moving direction corresponding to the comparison result; where a moving distance of the second interface is positively correlated with the difference value.

In some embodiments, the adjustment module 503 is configured to: move, when the comparison result indicates that the first brightness value is less than the second brightness value, the second interface in a direction towards the second sub-region until the difference value is less than or equal to the preset deviation threshold; and move, when the comparison result indicates that the first brightness value is greater than the second brightness value, the second interface in a direction towards the first sub-region until the difference value is less than or equal to the preset deviation threshold.

In some embodiments, the apparatus 500 further includes: a second display module, configured to maintain, when the difference value is less than or equal to the preset deviation threshold, a current display position of the second interface on the first interface.

With respect to the apparatus in the above embodiments, the specific manner in which each module performs an operation has been described in detail in the embodiments related to the method, and will not be described in detail here.

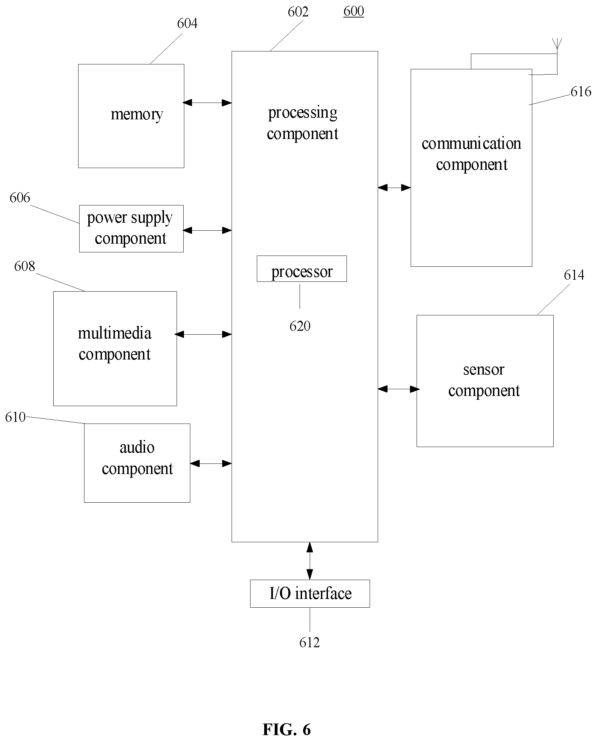

FIG. 6 is block diagram of an electronic device 600 according to an exemplary embodiment. For example, the device 600 may be a mobile phone, a computer, a digital broadcast terminal, a message transceiver device, a game console, a tablet device, a medical device, a fitness device, or a personal digital assistant.

Referring to FIG. 6, the device 600 may include one or more of the following components: a processing component 602, a memory 604, a power supply component 606, a multimedia component 608, an audio component 610, an input/output (I/O) interface 612, a sensor component 614, and a communication component 616.

The processing component 602 generally controls the overall operation of the device 600, such as operations associated with at least one of display, telephone calls, data communication, camera operations, and recording operations. The processing component 602 may include one or more processors 620 to execute an instruction to complete all or part of the steps of the method described above. In addition, the processing component 602 may include one or more modules that facilitate interaction between the processing component 602 and other components. For example, the processing component 602 may include a multimedia module to facilitate interaction between the multimedia component 608 and the processing component 602.

The memory 604 is configured to store various types of data to support the operations on the device 600. Examples of such data include at least one of the following: an instruction of any application program or method operated on the device 600, contact data, phonebook data, messages, pictures, videos, etc. The memory 604 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 606 supplies power to various components of the device 600. The power supply component 606 may include a power supply management system, one or more power supplies, and other components associated with generating, managing and distributing power for the device 600.

The multimedia component 608 includes a screen that provides an output interface between the device 600 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 608 includes a front-facing camera and/or a rear-facing camera. The front-facing camera and/or the rear-facing camera may receive external multimedia data when the device 600 is in an operating mode, such as a shooting mode or a video mode. Each of the front-facing camera and the rear-facing camera may be a fixed optical lens system or have a focal length and optical zoom capability.

The audio component 610 is configured to output and/or input audio signals. For example, the audio component 610 includes a microphone (MIC), configured to receive external audio signals when the device 600 is in an operating mode, such as a calling mode, a recording mode and a voice recognition mode. The received audio signals may be further stored in the memory 604 or sent via the communication component 616. In some embodiments, the audio component 610 further includes a speaker for outputting the audio signals.

The I/O interface 612 provides an interface between the processing component 602 and a peripheral interface module, and the peripheral interface module may be a keypad, a click wheel, a button, etc. These buttons may include, but are not limited to, a home button, a volume button, a start button, and a lock button.

The sensor component 614 includes one or more sensors configured to provide status assessment of various aspects of the device 600. For example, the sensor component 614 may detect an open/closed state of the device 600, relative positioning of the components, for example, the components are the display and small keypad of the device 600. The sensor component 614 may also detect a change in the position of the device 600 or a change in the position of one component of the device 600, the presence or absence of contact between the user and the device 600, the orientation or acceleration/deceleration of device 600, and temperature changes of the device 600. The sensor component 614 may include a proximity sensor that is configured to detect the presence of nearby objects in the absence of any physical contact. The sensor component 614 may also include a light sensor, such as a complementary metal oxide semiconductor (CMOS) or a charge coupled device (CCD) image sensor, for use in imaging applications. In some embodiments, the sensor component 614 may also include, but is not limited to, at least one of the following: an accelerometer sensor, a gyroscope sensor, a magnetic sensor, a pressure sensor, a temperature sensor.

The communication component 616 is configured to facilitate the communication between the device 600 and other devices by wired or wireless means. The device 600 may access a wireless network based on a communication standard, such as Wi-Fi, 4G, 5G, or a combination thereof. In an exemplary embodiment, the communication component 616 receives broadcast signals or broadcast related information from an external broadcast management system via a broadcast channel. In an exemplary embodiment, the communication component 616 further includes a near-field communication (NFC) module to facilitate short-range communication. For example, the NFC module may be implemented based on the radio frequency identification (RFID) technology, the infrared data association (IrDA) technology, the ultra wide band (UWB) technology, the Bluetooth (BT) technology, or other technologies.

In an exemplary embodiment, the device 600 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements.

In an exemplary embodiment, a non-transitory computer-readable storage medium including an instruction is provided, such as the memory 604 including an executable instruction or a computer program. The instruction is capable of being executed by the processor 620 of the device 600 to perform the methods described above. For example, the non-transitory computer-readable storage medium may be an ROM, a random access memory (RAM), a CD-ROM, a magnetic tape, a floppy disk, or an optical data storage device.

When executed by the processor of the electronic device, the instruction causes the electronic device to perform the interface processing method described above. For example, the method includes: displaying, in a floating manner, a second interface on a first interface, where the second interface has a smaller size than the first interface; determining a target region in the first interface not covered by the second interface; and adjusting, based on a pixel value of a pixel in the target region, a display position of the second interface on the first interface.

The embodiments of the present invention provide a computer program product. The computer program product includes a computer program or an executable instruction. The computer program or the executable instruction is stored in a computer-readable storage medium. A processor of the computer device reads the computer program or the executable instruction from the computer-readable storage medium. The processor executes the computer program or the executable instruction, causing the computer device to perform any interface processing method described above in the embodiments of the present invention.

After considering the specification and practicing the invention disclosed herein, those skilled in the art will easily come up with other implementation solutions of the present invention. The present invention is intended to cover any variations, uses or adaptive changes that fall within the scope of the invention defined by the claims.

It should be understood that the present invention is not limited to the precise structure which has been described above and illustrated in the accompanying drawings, and that various modifications and alterations may be made without departing from the scope of the present invention. The scope of the present invention is limited only by the appended claims.

## Claims

1. An interface processing method, **characterized in** comprising:
displaying (101), in a floating manner, a second interface (202, 301) on a first interface (201), wherein the second interface (202, 301) has a smaller size than the first interface (201);
determining (102) a target region (203) in the first interface (201) not covered by the second interface (202, 301); and
adjusting (103), based on a pixel value of a pixel in the target region (203), a display position of the second interface (202, 301) on the first interface (201).

2. The method according to claim 1, wherein the target region (203) comprises a first sub-region (302) and a second sub-region (303) located at two opposite sides of the second interface (202, 301); and
the adjusting (103) the display position of the second interface (202, 301) on the first interface (201) comprises:
in response to the first sub-region (302) having a same width as the second sub-region (303), determining (404), based on pixel values of pixels in the first sub-region (302), a first brightness value corresponding to the first sub-region (302), and determining (404), based on pixel values of pixels in the second sub-region (303), a second brightness value corresponding to the second sub-region (303); and
adjusting, based on the first brightness value and the second brightness value, the display position of the second interface (202, 301) on the first interface (201);
wherein a width of a sub-region is a vertical distance between a side edge of the first interface (201) and a side edge of the second interface (202, 301).

3. The method according to claim 2, wherein the adjusting, based on the first brightness value and the second brightness value, the display position of the second interface (202, 301) on the first interface (201) comprises:
determining, in response to the first brightness value and the second brightness value being different, a difference value between the first brightness value and the second brightness value; and
adjusting, in response to the difference value being greater than a preset deviation threshold, the display position of the second interface (202, 301) on the first interface (201).

4. The method according to claim 3, wherein the adjusting, in response to the difference value being greater than the preset deviation threshold, the display position of the second interface (202, 301) on the first interface (201) comprises:
obtaining, in response to the difference value being greater than the preset deviation threshold, a comparison result by comparing the first brightness value and the second brightness value; and
moving the second interface (202, 301) in accordance with a moving direction corresponding to the comparison result;
wherein a moving distance of the second interface (202, 301) is positively correlated with the difference value.

5. The method according to claim 4, wherein the moving the second interface (202, 301) in accordance with the moving direction corresponding to the comparison result comprises:
moving (407), in response to the comparison result indicating that the first brightness value is less than the second brightness value, the second interface (202, 301) in a direction towards the second sub-region (303) until the difference value is less than or equal to the preset deviation threshold; and
moving (408), in response to the comparison result indicating that the first brightness value is greater than the second brightness value, the second interface (202, 301) in a direction towards the first sub-region (302) until the difference value is less than or equal to the preset deviation threshold.

6. The method according to claim 3, further comprising:
maintaining, in response to the difference value being less than or equal to the preset deviation threshold, the display position of the second interface (202, 301) on the first interface (201).

7. An electronic device (600), **characterized in** comprising:
a processor (620); and
a memory (604) storing an instruction executable by the processor;
wherein the processor (620) is configured to:
display, in a floating manner, a second interface (202, 301) on a first interface (201), wherein the second interface (202, 301) has a smaller size than the first interface (201);
determine a target region (203) in the first interface (201) not covered by the second interface (202, 301); and
adjust, based on a pixel value of a pixel in the target region (203), a display position of the second interface (202, 301) on the first interface (201).

8. The electronic device (600) according to claim 7, wherein the target region (203) comprises a first sub-region (302) and a second sub-region (303) located at two opposite sides of the second interface (202, 301), and the processor is further configured to:
in response to the first sub-region (302) having a same width as the second sub-region (303), determine, based on pixel values of pixels in the first sub-region (302), a first brightness value corresponding to the first sub-region (302), and determine, based on pixel values of pixels in the second sub-region (303), a second brightness value corresponding to the second sub-region (303); and
adjust, based on the first brightness value and the second brightness value, the display position of the second interface (202, 301) on the first interface (201);
wherein a width of a sub-region is a vertical distance between a side edge of the first interface (201) and a side edge of the second interface (202, 301).

9. The electronic device (600) according to claim 8, wherein the processor is further configured to:
determine, in response to the first brightness value and the second brightness value being different, a difference value between the first brightness value and the second brightness value; and
adjust, in response to the difference value being greater than a preset deviation threshold, the display position of the second interface (202, 301) on the first interface (201).

10. The electronic device (600) according to claim 9, wherein the processor is further configured to:
obtain, in response to the difference value being greater than the preset deviation threshold, a comparison result by comparing the first brightness value and the second brightness value; and
move the second interface (202, 301) in accordance with a moving direction corresponding to the comparison result;
wherein a moving distance of the second interface (202, 301) is positively correlated with the difference value.

11. The electronic device (600) according to claim 10, wherein the processor is further configured to:
move, in response to the comparison result indicating that the first brightness value is less than the second brightness value, the second interface (202, 301) in a direction towards the second sub-region (303) until the difference value is less than or equal to the preset deviation threshold; and
move, in response to the comparison result indicating that the first brightness value is greater than the second brightness value, the second interface (202, 301) in a direction towards the first sub-region (302) until the difference value is less than or equal to the preset deviation threshold.

12. The electronic device (600) according to claim 9, wherein the processor is further configured to:
maintain, in response to the difference value being less than or equal to the preset deviation threshold, the display position of the second interface (202, 301) on the first interface (201).

13. A non-transitory computer-readable storage medium, **characterized in** storing instructions that, when executed by a processor of an electronic device, causes the electronic device to perform the interface processing method according to any one of claims 1 to 6.

14. A computer program product, **characterized in** comprising a computer program or an instruction, wherein the computer program or the instruction, when executed by a processor, causes the processor to perform the interface processing method according to any one of claims 1 to 6.

## Amended claims

### Amended claims in accordance with Rule 137(2) EPC.

1. An interface processing method, **characterized in** comprising:
displaying (101), in a floating manner, a second interface (202, 301) on a first interface (201), wherein the second interface (202, 301) has a smaller size than the first interface (201);
determining (102) a target region (203) in the first interface (201) not covered by the second interface (202, 301);
determining a pixel value of a pixel in the target region (203); and
adjusting (103), based on the pixel value of the pixel in the target region (203), a display position of the second interface (202, 301) on the first interface (201).

2. The method according to claim 1, wherein the target region (203) comprises a first sub-region (302) and a second sub-region (303) located at two opposite sides of the second interface (202, 301); and
the adjusting (103) the display position of the second interface (202, 301) on the first interface (201) comprises:
in response to the first sub-region (302) having a same width as the second sub-region (303), determining (404), based on pixel values of pixels in the first sub-region (302), a first brightness value corresponding to the first sub-region (302), and determining (404), based on pixel values of pixels in the second sub-region (303), a second brightness value corresponding to the second sub-region (303); and
adjusting, based on the first brightness value and the second brightness value, the display position of the second interface (202, 301) on the first interface (201);
wherein a width of a sub-region is a vertical distance between a side edge of the first interface (201) and a side edge of the second interface (202, 301).

3. The method according to claim 2, wherein the adjusting, based on the first brightness value and the second brightness value, the display position of the second interface (202, 301) on the first interface (201) comprises:
determining, in response to the first brightness value and the second brightness value being different, a difference value between the first brightness value and the second brightness value; and
adjusting, in response to the difference value being greater than a preset deviation threshold, the display position of the second interface (202, 301) on the first interface (201).

4. The method according to claim 3, wherein the adjusting, in response to the difference value being greater than the preset deviation threshold, the display position of the second interface (202, 301) on the first interface (201) comprises:
obtaining, in response to the difference value being greater than the preset deviation threshold, a comparison result by comparing the first brightness value and the second brightness value; and
moving the second interface (202, 301) in accordance with a moving direction corresponding to the comparison result;
wherein a moving distance of the second interface (202, 301) is positively correlated with the difference value.

5. The method according to claim 4, wherein the moving the second interface (202, 301) in accordance with the moving direction corresponding to the comparison result comprises:
moving (407), in response to the comparison result indicating that the first brightness value is less than the second brightness value, the second interface (202, 301) in a direction towards the second sub-region (303) until the difference value is less than or equal to the preset deviation threshold; and
moving (408), in response to the comparison result indicating that the first brightness value is greater than the second brightness value, the second interface (202, 301) in a direction towards the first sub-region (302) until the difference value is less than or equal to the preset deviation threshold.

6. The method according to claim 3, further comprising:
maintaining, in response to the difference value being less than or equal to the preset deviation threshold, the display position of the second interface (202, 301) on the first interface (201).

7. An electronic device (600), **characterized in** comprising:
a processor (620); and
a memory (604) storing an instruction executable by the processor;
wherein the processor (620) is configured to:
display, in a floating manner, a second interface (202, 301) on a first interface (201), wherein the second interface (202, 301) has a smaller size than the first interface (201);
determine a target region (203) in the first interface (201) not covered by the second interface (202, 301);
determine a pixel value of a pixel in the target region (203); and
adjust, based on the pixel value of the pixel in the target region (203), a display position of the second interface (202, 301) on the first interface (201).

8. The electronic device (600) according to claim 7, wherein the target region (203) comprises a first sub-region (302) and a second sub-region (303) located at two opposite sides of the second interface (202, 301), and the processor is further configured to:
in response to the first sub-region (302) having a same width as the second sub-region (303), determine, based on pixel values of pixels in the first sub-region (302), a first brightness value corresponding to the first sub-region (302), and determine, based on pixel values of pixels in the second sub-region (303), a second brightness value corresponding to the second sub-region (303); and
adjust, based on the first brightness value and the second brightness value, the display position of the second interface (202, 301) on the first interface (201);
wherein a width of a sub-region is a vertical distance between a side edge of the first interface (201) and a side edge of the second interface (202, 301).

9. The electronic device (600) according to claim 8, wherein the processor is further configured to:
determine, in response to the first brightness value and the second brightness value being different, a difference value between the first brightness value and the second brightness value; and
adjust, in response to the difference value being greater than a preset deviation threshold, the display position of the second interface (202, 301) on the first interface (201).

10. The electronic device (600) according to claim 9, wherein the processor is further configured to:
obtain, in response to the difference value being greater than the preset deviation threshold, a comparison result by comparing the first brightness value and the second brightness value; and
move the second interface (202, 301) in accordance with a moving direction corresponding to the comparison result;
wherein a moving distance of the second interface (202, 301) is positively correlated with the difference value.

11. The electronic device (600) according to claim 10, wherein the processor is further configured to:
move, in response to the comparison result indicating that the first brightness value is less than the second brightness value, the second interface (202, 301) in a direction towards the second sub-region (303) until the difference value is less than or equal to the preset deviation threshold; and
move, in response to the comparison result indicating that the first brightness value is greater than the second brightness value, the second interface (202, 301) in a direction towards the first sub-region (302) until the difference value is less than or equal to the preset deviation threshold.

12. The electronic device (600) according to claim 9, wherein the processor is further configured to:
maintain, in response to the difference value being less than or equal to the preset deviation threshold, the display position of the second interface (202, 301) on the first interface (201).

13. A non-transitory computer-readable storage medium, **characterized in** storing instructions that, when executed by a processor of an electronic device, causes the electronic device to perform the interface processing method according to any one of claims 1 to 6.

14. A computer program product, **characterized in** comprising a computer program or an instruction, wherein the computer program or the instruction, when executed by a processor, causes the processor to perform the interface processing method according to any one of claims 1 to 6.
